# EUROPEAN PATENT APPLICATION

(11) **EP 0 560 997 A1**
(43) Date of publication of application: **22.09.1993**
(21) Application number: 92921099.5
(22) Date of filing: 05.10.1992
(51) Int. Cl.: G05B 19/18, G05B 19/405

(54) **SIGNAL PROCESSING SYSTEM OF PLURALITY OF MANUAL PULSE GENERATORS**

(30) Priority: 09.10.1991 JP 262208/91
(71) Applicant: FANUC LTD., Minamitsuru-gun, Yamanashi 401-05 (JP)
(72) Inventor: AKASHI, Seiji Fanuc Mansio Harimomi 11-401, Yamanashi 401-05 (JP)
(74) Representative: Brunner, Michael John
(86) International application number: JP9201292
(87) International publication number: WO9307545

(57) **Abstract**

A signal processing system which eliminates the manual selection of switching manual pulse generators. An operation state of a plurality of manual pulse generators (231, 26) is monitored, and when at least two manual pulse generators operate simultaneously, their output signals are inhibited from entering an input/output circuit (22) of a numeric controller by an AND circuit (233f) and buffer (233h). On the other hand, when only one manual pulse generator is operated, its ouput is passed to the input/output circuit (22) of the numeric controller. When at least one of the manual pulse generators operates, this information is indicated on a display (232, 27) through an OR circuit (233g).

## Description

### Technical Field

This invention relates to a signal processing system for a plurality of manual pulse generators provided in a numerical control device, and more particularly, to a signal processing system for a plurality of manual pulse generators which are connected to a numerical control device for driving one axis.

### Background Art

In some conventional systems including a large number of numerical control devices which are connected in series and controlled by a single main control device, a manual pulse generator for manually driving an axis is provided for each of the numerical control devices and a separate manual pulse generator is provided also for the main control device. In such systems, an axis of each numerical control device can be driven by the manual pulse generator associated therewith, and also by the manual pulse generator of the main control device. A changeover switch is provided between the numerical control device and these manual pulse generators, and when operated, allows a pulse signal from one of the two manual pulse generators to be supplied to the numerical control device.

Thus, two manual pulse generators are used for driving one axis of a numerical control device, but since the axis can be driven by any other manual pulse generator associated with the other series-connected numerical control devices, it can be said that a plurality of manual pulse generators are provided for driving one axis of each numerical control device.

Usually, however, the manual pulse generator of a numerical control device and that of the main control device are arranged at a distance from each other, and in many cases, the changeover switch is provided on a control panel installed at a distance from the manual pulse generators. Accordingly, to switch between the manual pulse generators, the operator must access the control panel at some distance to operate the changeover switch, thus requiring labor to operate the changeover switch.

As an alternative, a changeover switch may be provided for each of the manual pulse generators. In this case, however, not only the changeover switch associated with the manual pulse generator to be used is turned on, but also the other changeover switches must be turned off. Thus, labor is still required to operate the changeover switches.

### Disclosure of the Invention

This invention was created in view of the above circumstances, and an object thereof is to provide a signal processing system for a plurality of manual pulse generators which eliminates the labor to operate a changeover switch.

To achieve the above object, this invention provides a signal processing system for a plurality of manual pulse generators which are connected to a numerical control device for driving one axis, the system comprising gate means which opens and closes in accordance with operating states of the plurality of manual pulse generators, and output means for delivering output signals of the plurality of manual pulse generators to the numerical control device through the gate means.

The gate means closes when detecting output signals simultaneously supplied from at least two of the plurality of manual pulse generators, to thereby prohibit the signals from being supplied to the numerical control device.

The system further comprises display means, and when at least one of the plurality of manual pulse generators is operating, the display means informs an operator that the manual pulse generator is in operation.

This invention also provides a signal processing method for a plurality of manual pulse generators which are connected to a numerical control device for driving one axis, the method comprising a step of monitoring operating states of the plurality of manual pulse generators, and a step of prohibiting output signals of the plurality of manual pulse generators from being supplied to the numerical control device when at least two of the plurality of manual pulse generators are simultaneously operating.

The operating states of the manual pulse generators are monitored. When at least two of the plurality of manual pulse generators are simultaneously operating, output signals of the manual pulse generators are prohibited from being supplied to the numerical control device; otherwise the output signals of the manual pulse generators are transferred directly to the numerical control device. Thus, the labor of operating changeover switches or the like is eliminated, and it is possible to avoid situations where pulses are supplied simultaneously from a plurality of manual pulse generators.

When at least one of the plurality of manual pulse generators is in operation, such status of operation is informed to the operator, whereby the operator can be warned that the axis which he or she is about to operate is being actuated through another manual pulse generator.

### Brief Description of the Drawings

FIG. 1 is a block diagram showing the hardware configuration of a manual pulse processing circuit according to one embodiment of this invention;
FIG. 2 is a block diagram showing the hardware of a numerical control device (CNC) to which this invention is applied; and
FIG. 3 is a flow chart of a manual pulse process according to a second embodiment, which is executed by a manual pulse processing circuit.

### Best Mode of Carrying Out the Invention

An embodiment of this invention will be described with reference to the drawings.

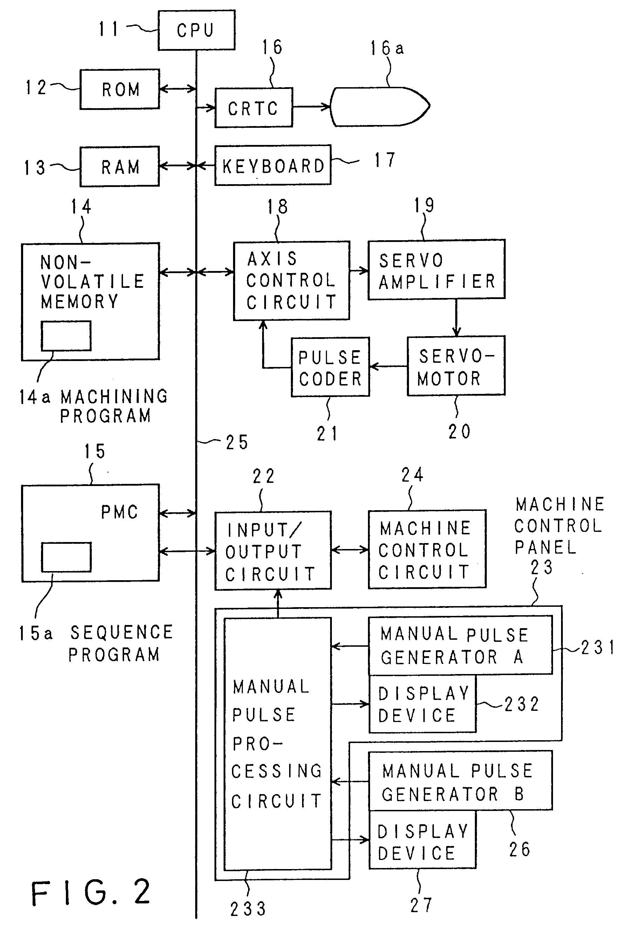

FIG. 2 is a block diagram illustrating the hardware of a numerical control device (CNC) to which this invention is applied. A processor 11 globally controls the numerical control device in accordance with a system program stored in a ROM 12, which comprises an EPROM or an EEPROM. A RAM 13 comprises an SRAM and stores various data, and a nonvolatile memory 14 stores a machining program 14a, parameters and the like. A battery backup CMOS or the like is used for the nonvolatile memory 14, and thus the contents thereof are retained even after the power supply to the numerical control device is cut off.

A PMC (programmable machine controller) 15 is supplied with commands such as M-, S-, and T-functions, decodes the commands by using a sequence program 15a, and outputs a signal to control a machine tool. A graphic control circuit 16 converts data stored in the RAM 13, such as current positions and moved distances of individual axes, into display signals, which are then supplied to a display device 16a to be displayed thereby. A CRT, a liquid crystal display or the like is used for the display device 16a. A keyboard 17 is used for the entry of various data.

An axis control circuit 18 is supplied with a position command from the processor 11, and outputs a velocity command signal to a servo amplifier 19 to control a servomotor 20. The servo amplifier 19 amplifies the velocity command signal and drives the servomotor 20. A pulse coder 21 is coupled to the servomotor 20, and a position feedback pulse signal output from the pulse coder 21 is fed back to the axis control circuit 18. Another type of position detector, such as a linear scale, may be used in place of the pulse coder 21. These elements are provided for each of the axes, but since the configuration of the elements is identical, only those elements associated with one axis are illustrated.

An input/output circuit 22 transfers signals with respect to the machine side. More specifically, the input/output circuit 22 supplies the PMC 15 with command signals from a machine control panel 23 including a manual pulse generator etc., as mentioned later, a limit signal, overtravel signal, and sensor contact signal from a machine control circuit 24. The PMC 15 processes these signals by using the sequence program 15a, and outputs signals that are necessary to control the machine side. Further, signals output from the PMC 15 for controlling pneumatic actuators and the like on the machine side are supplied to the machine side via the input/output circuit 22. Signals needed by the numerical control device side are transferred to the RAM 13 through a bus 25, and are read by the processor 11.

In FIG. 2, a spindle control circuit for controlling a spindle, a spindle amplifier, a spindle motor, etc. are omitted. Further, although the illustrated embodiment uses a single processor, a multiprocessor system including a plurality of processors may be used according to the system configuration.

The machine control panel 23 includes a manual pulse generator A 231, a display device 232, and a manual pulse processing circuit 233. The manual pulse processing circuit 233 is connected to another manual pulse generator B 26, which is situated at a distance from the numerical control device concerned, and also to a display device 27 arranged in the vicinity of the manual pulse generator B 26.

The manual pulse generators A 231 and B 26 have the same arrangement, and each output a pulse train in accordance with a rotated angle of a manual handle (not shown), to cause a predetermined axis to make accurate movements in sequence such that a tool can be accurately positioned. More specifically, when the manual handle is turned either in the positive or negative direction, the angular position of the handle is detected by a built-in optical sensor, and pulses proportional to the angular position of the manual handle are output. The pulses are supplied to the input/output circuit 22 via the manual pulse processing circuit 233 and are counted by the processor 11, which then generates signals necessary for feed operation of the machine tool in accordance with the count.

The display devices 232 and 27 are each designed to light an LED or the like for a predetermined time when supplied with a high-level signal from the manual pulse processing circuit 233.

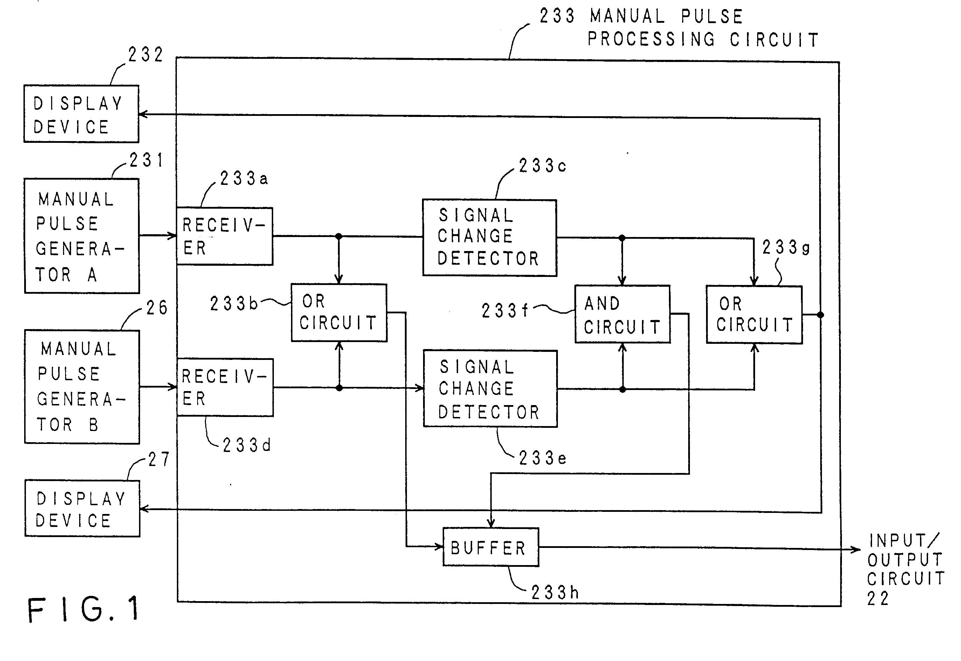

The manual pulse processing circuit 233 according to the first embodiment has a hardware configuration as shown in FIG. 1. Pulses from the manual pulse generator A 231 are supplied to an OR circuit 233b and a signal change detector 233c via a receiver 233a. Similarly, pulses from the manual pulse generator B 26 are supplied to the OR circuit 233b and another signal change detector 233e via a receiver 233d. The signal change detectors 233c and 233e are each designed to output a continuous high-level signal as long as a pulse signal or the like appears at the input side thereof within a predetermined time, and the retrigerable monostable multivibrator 74LS123 is used therefor, for example. The output of the OR circuit 233b is supplied to a buffer 233h. The buffer 233h functions as a gate in such a manner that when a high-level signal is supplied to a gate control terminal thereof, the gate is closed and an input signal is not passed therethrough to the output side.

The outputs of the signal change detectors 233c and 233e are supplied to an AND circuit 233f and an OR circuit 233g. The output of the AND circuit 233f is supplied to the gate control terminal of the buffer 233h, and the output of the OR circuit 233g is supplied to the display devices 232 and 27. The output of the buffer 233h is supplied to the input/output circuit 22.

The operation of the manual pulse processing circuit 233 constructed as above will be now described.

When a pulse is input from one of the manual pulse generators A 231 or B 26, for example, from the manual pulse generator A 231, the input pulse is supplied to the buffer 233h via the OR circuit 233b. The pulse is also supplied to the signal change detector 233c, whereby the detector 233c outputs a high-level signal. The signal change detector 233e, in this case, does not output a high-level signal because no signal is input thereto. Accordingly, the AND circuit 233f does not output a high-level signal, whereas the OR circuit 233g outputs a high-level signal. Since no high-level signal is supplied from the AND circuit 233f, the gate of the buffer 233h is open, allowing the pulse from the manual pulse generator A 231 to pass therethrough to the input/output circuit 22. The display devices 232 and 27 are both lighted in response to the high-level signal from the OR circuit 233g, whereby an operator, particularly an operator who is about to manipulate the manual pulse generator B 26, is informed that at least one of the manual pulse generators A 231 and B 26 is in use.

If, in spite of the warning by the lighted display devices 232 and 27, both the manual pulse generators A 231 and B 26 are simultaneously operated and the manual pulse processing circuit 233 is supplied with pulses from these two manual pulse generators, then the signal change detectors 233c and 233e both output a high-level signal. Accordingly, a high-level signal is output from the AND circuit 233f and the gate of the buffer 233h is closed, whereby the pulses from the two manual pulse generators are not supplied to the input/output circuit 22 at all. As a result, no axis is moved, and an undesired axis motion contrary to the operator's intention is avoided.

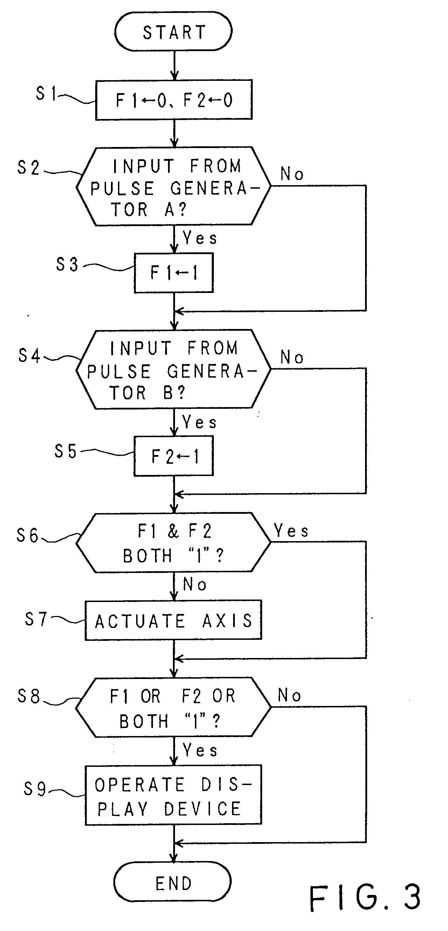

As described above, the manual pulse processing circuit 233 of the first embodiment has the hardware configuration shown in FIG. 2. According to a second embodiment, a processor functions as the manual pulse processing circuit 233 in FIG. 1 and executes a manual pulse process shown in the flow chart of FIG. 3. The manual pulse process is executed at intervals of, e.g., 8 msec, and in the flow chart, the numbers following "S" represent step numbers.
[S1] Flags F1 and F2 are individually set to zero.
[S2] It is determined whether a pulse has been supplied from the manual pulse generator A 231 within a predetermined time (e.g., 8 msec). If a pulse has been input, the program proceeds to Step S3, and if not, the program proceeds to Step S4.
[S3] The flag F1 is set to "1."
[S4] It is determined whether a pulse has been supplied from the manual pulse generator B 26 within a predetermined time (e.g., 8 msec). If a pulse has been input, the program proceeds to Step S5, and if not, the program proceeds to Step S6.
[S5] The flag F2 is set to "1."
[S6] It is determined whether the flags F1 and F2 are both "1". If the result of the determination is YES, i.e., if pulses have been supplied from both of the manual pulse generators A 231 and B 26, manual operation of the axis is not carried out and the program proceeds to Step S8. On the other hand, if the result of the determination is NO, e.g., if a pulse has been supplied from one of the manual pulse generators A 231 or B 26 but not from both, the program proceeds to Step S7 to carry out manual operation of the axis.
[S7] The pulse output from the manual pulse generator A 231 or B 26 is supplied to the input/output circuit 22 to drive the axis.
[S8] It is determined whether at least one of the flags F1 and/or F2 is "1." If either of the flags F1 and F2 or both flags are "1," the program proceeds to Step S9; if both flags are zero, i.e., if a pulse has been supplied from neither the manual pulse generator A 231 nor B 26, the program ends.
[S9] A high-level signal is sent to the display devices 232 and 27, to light the LED or the like for a predetermined time.

In both embodiments described above, two manual pulse generators are provided for driving one axis, but the number of pulse generators is not limited to two and three or more manual pulse generators may alternatively be used for driving one axis. In this case, when pulses are supplied simultaneously from at least two manual pulse generators, supply of the pulses to the input/output circuit 22 is prohibited. Also in this case, when a pulse is supplied from at least one manual pulse generator, a high-level signal is sent to the display devices 232 and 27.

As described above, according to this invention, when at least two manual pulse generators among a plurality of pulse generators are simultaneously operating, the signals output from a plurality of the manual pulse generators are prohibited from being supplied to the numerical control device; otherwise a signal output from a manual pulse generator is transferred directly to the numerical control device. Thus, the switching operation of, e.g., changeover switches, is omitted, and it is possible to avoid situations where pulses are supplied simultaneously from a plurality of manual pulse generators. Further, changeover switches or like elements are unnecessary, thus eliminating the need to connect such elements to machine tools using numerical control devices.

Furthermore, when at least one of a plurality of manual pulse generators is in operation, the status is notified to the operator, whereby the operator is warned that the axis which he or she is about to operate is being actuated through another manual pulse generator.

## Claims

1. A signal processing system for a plurality of manual pulse generators which are connected to a numerical control device for driving one axis, the system comprising:
gate means which opens and closes in accordance with operating states of said plurality of manual pulse generators; and
output means for delivering output signals of said plurality of manual pulse generators to the numerical control device through the gate means.

2. The signal processing system for a plurality of manual pulse generators according to claim 1, wherein said gate means closes when detecting output signals simultaneously supplied from at least two of said plurality of manual pulse generators, to thereby prohibit the signals from being supplied to the numerical control device.

3. The signal processing system for a plurality of manual pulse generators according to claim 1, which further comprises display means, and wherein, when at least one of said plurality of manual pulse generators is operating, the display means informs an operator that said at least one manual pulse generator is in operation.

4. A signal processing method for a plurality of manual pulse generators which are connected to a numerical control device for driving one axis, the method comprising:
monitoring operating states of said plurality of manual pulse generators; and
prohibiting output signals of said plurality of manual pulse generators from being supplied to the numerical control device when at least two of said plurality of manual pulse generators are simultaneously operating.

5. The signal processing method according to claim 4, wherein, when at least one of said plurality of manual pulse generators is operating, the status of operation of said at least one manual pulse generator is informed to an operator.
